# DEMANDE DE BREVET EUROPEEN

(11) **EP 2 055 195 A1**
(43) Date de publication de la demande: **06.05.2009**
(21) Numéro de dépôt: 07119534.1
(22) Date de dépôt: 29.10.2007
(51) Int. Cl.: A23D 9/04, C11B 3/00, C11B 3/12, C11B 7/00, A23L 1/30

(54) **Procédé de reduction de la teneur en acides gras saturés de la matiere grasse du lait , produits obtenus et applications de ceux-ci.**

(71) Demandeur: Corman S.A., 4834 Goe (BE)
(72) Inventeur: Dalemans, Daniel, B-4040, Herstal (BE)
(74) Mandataire: pronovem

(57) **Abrégé**

La présente invention est relative à un procédé de réduction de la teneur en acides gras saturés de la matière grasse du lait, une matière grasse de lait qui comporte une teneur réduite en acides gras saturés, de préférence obtenue par le procédé de l'invention ainsi que des compositions alimentaires comprenant ladite matière grasse.

## Description

### Objet de l'invention.

La présente invention est relative à un procédé de réduction de la teneur en acides gras saturés de la matière grasse du lait, à la matière grasse de lait qui comporte une teneur réduite en acides gras saturés de préférence obtenue par le procédé de l'invention ainsi que des compositions alimentaires dérivés de cette matière grasse de lait et leurs applications.

### Arrière-plan technologique à la base de l'invention.

Comme toutes les matières grasses alimentaires, la matière grasse du lait est principalement constituée de triglycérides, triesters d'acides gras et de glycérol (à 98%). La matière grasse du lait se caractérise par une grande variété d'acides gras (au moins dix acides gras différents) et par une grande variété de triglycérides qui sont des combinaisons de ces acides gras.

On peut notamment citer les acides gras à chaîne courte de 4 à 10 carbones, qui sont essentiellement saturés, les acides gras à chaîne longue de 12 à 18 carbones qui sont surtout saturés et mono-insaturés, les acides gras poly-insaturés à chaîne longue présents à raison d'environ 3% ; les dix acides gras sont surtout dits en configuration « cis » et il existe peu d'acides gras en configuration « trans ».

Ces acides gras sont principalement à nombre pair d'atomes de carbone, mais il existe également une faible proportion d'acides gras à nombre impair d'atomes de carbone (surtout à 15 et 17 atomes de carbone).

En outre, les triglycérides sont soit des triglycérides à chaîne courte (C36 à C42) contenant un acide gras à chaîne courte, soit des triglycérides à chaîne longue (C44 à C54) ne contenant que des acides gras à chaîne longue, ou soit des triglycérides à chaîne courte et à chaîne longue qui peuvent être tri-saturés, c'est-à-dire qu'ils ne contiennent que des acides gras saturés, ou insaturés, c'est-à-dire qu'ils ne contiennent qu'un ou deux acides gras insaturés.

La matière grasse du lait et les produits alimentaires qui sont riches en matière grasse du lait (comme le beurre, la crème, les fromages,...) souffrent d'une mauvaise image nutritionnelle, car la composition en acides gras et la teneur en cholestérol de cette matière grasse découragent leur utilisation.

La composition en acides gras d'une matière grasse laitière est présentée dans le tableau 1.

On observe à la lecture de ce tableau 1 que la matière grasse en acides gras contient 65,5% d'acides gras saturés, 31% d'acides gras mono-insaturés (« cis » et « trans ») et environ 3,5% d'acides gras poly-insaturés (« cis » et « trans »), ces taux étant exprimés en % poids sur la somme de tout les acides gras ramenés à 100%, somme appelée aussi acides gras totaux.

En outre, cette composition en acides gras varie en fonction des saisons et en fonction de l'alimentation des vaches laitières, au printemps et en été la matière grasse du lait est moins saturée, en raison d'une alimentation essentiellement constituée d'herbe fraîche apportant une quantité importante d'acides gras insaturés, alors qu'en hiver l'alimentation du bétail (fourrage conservé) entraîne une modification de la composition da la matière grasse laitière qui s'enrichit en acides gras saturés.

**Tableau 1**

| | Matière grasse du lait d'hiver | Matière grasse du lait d'été | Moyenne |
|---|---|---|---|
| Acides gras (% poids) : | | | |
| C4 | 3.7 | 3.6 | 3.7 |
| C6 | 2.5 | 2.1 | 2.3 |
| C8 | 1.5 | 1.2 | 1.4 |
| C10 | 3.1 | 2.5 | 2.8 |
| C10:1 | 0.3 | 0.3 | 0.3 |
| C12 | 4.0 | 3.0 | 3.5 |
| C14 | 11.8 | 9.1 | 10.4 |
| C14:1 | 2.0 | 2.0 | 2.0 |
| C15 | 1.2 | 1.1 | 1.2 |
| C16 | 32.4 | 24.2 | 28.3 |
| C16:1 | 2.6 | 2.6 | 2.6 |
| C17 | 0.8 | 0.6 | 0.7 |
| C17:1 | 0.2 | 0.3 | 0.3 |
| C18 | 9.7 | 13.0 | 11.3 |
| C18:1 cis | 18.5 | 25.4 | 22.0 |
| C18:1 trans | 2.8 | 4.8 | 3.8 |
| C18:2 cis-cis | 2.1 | 2.3 | 2.2 |
| C18:2 conj. cis-trans | 0.4 | 1.0 | 0.7 |
| C18:3 | 0.3 | 0.8 | 0.6 |
| Somme saturés | 70.8 | 60.5 | 65.6 |
| Somme monoinsaturés (cis+trans) | 26.4 | 35.4 | 30.9 |
| Somme polyinsaturés (cis+trans) | 2.8 | 4.1 | 3.5 |

De plus, comme la matière du lait est une matière grasse animale, elle contient du cholestérol (en moyenne 280 mg. pour 100 g.). Cependant, les recommandations nutritionnelles conseillent de limiter l'apport alimentaire en cholestérol à maximum 300 mg. par jour. Par conséquent, une amélioration de l'image nutritionnelle de la matière grasse du lait passe par la réduction de sa teneur en cholestérol et de sa teneur en acides gras saturés.

### Etat de la technique.

Actuellement l'extraction du cholestérol de la matière grasse du lait est réalisée industriellement par des procédés physiques tels que l'encapsulation moléculaire au moyen d'une cyclodextrine ou par l'entraînement à la vapeur. Ces procédés permettent d'extraire au minimum 75% du cholestérol initialement présent.

De même, des méthodes de réduction de la teneur en acides gras saturés de la matière grasse laitière existent, mais donnent des résultats nettement insuffisants.

En effet, il s'agit de pratiques d'élevage nécessitant une alimentation spécifique des vaches laitières. En effet, il est possible de modifier l'alimentation des vaches laitières en leur fournissant un aliment enrichi en acides gras poly-insaturés (par exemple un aliment à base de lin, de soja).

Les effets de cet aliment sont surtout remarquables en hiver où l'on observe une comparaison avec une ration hivernale à base de foin ou d'ensilages. Cependant, ces effets sont très limités durant les autres saisons où le bétail se nourrit d'herbe (car l'herbe fraîche est riche en acides gras poly-insaturés de type omega-3). Les huiles apportées dans l'aliment destiné au bétail subissent une biohydrogénation importante dans le rumen de la vache qui provoque une augmentation importante du taux d'acides gras insaturés en conformation de type « trans » dans la matière grasse du lait, ce qui n'est pas nécessairement souhaitable étant donné la position mitigée des scientifiques de la nutrition sur les qualités des acides gras de type « trans ». Cet effet réduit partiellement l'avantage de la réduction des acides gras saturés obtenus.

Une protection de l'huile insaturée apportée dans la ration permet de limiter la biohydrogénation. C'est la pratique recommandée par la société Rumentek (Australie). Cet effet est obtenu par la coque protectrice qui est constituée de substances non dégradées par les microorganismes du rumen. Les meilleurs résultats annoncés par ces pratiques de modification de l'alimentation de la vache laitière permettent d'obtenir une réduction relative du taux d'acides gras saturés de 20 à 25%, le taux d'acides gras saturés passe de 70.5 à 54.4% (réduction de 16.1% en valeur absolue). (Poppitt, S.D. et al. 2002. Lipid-lowering effects of a modified butter-fat: a controlled intervention trial in healthy men, European Journal of Clinical Nutrition, 56, 64-71).

Cependant, en plus de la réduction des acides gras saturés de la matière grasse, ce procédé nécessite une alimentation enrichie en huile destinée au bétail, ce qui provoque des contraintes d'élevage et de collecte sélective qui augmenteront le coût du produit laitier obtenu. En outre, cette modification de l'alimentation des vaches laitières provoque une baisse du taux de matière grasse dans le lait (taux butyreux), voire même du taux protéique. (Paccard P., Chenais F., Brunschwig P. Juillet 2006. Maîtrise de la matière grasse du lait par l'alimentation des vaches laitières, Etude bibliographique et simulations technico-économiques, Collection résultats, Onilait (2 rue Saint Charles, 75740 Paris Cedex 15) et Institut de l'Elevage (149 rue de Bercy, 75595 Paris Cedex 12), Compte rendu 030631012.

Une autre possibilité de réduction de la teneur en acides gras saturés dans la matière grasse du lait consiste à obtenir un fractionnement multiple de la matière grasse du lait par cristallisation. Le fractionnement multiple des matières grasses par cristallisation s'applique aux matières grasses dites concrètes (plastiques à température ambiante) comme pour l'huile de palme ou la matière grasse du lait. Cette technique permet d'obtenir des fractions plus dures et plus molles (voire liquides) mieux adaptées à certaines applications (par exemple les beurres durs pour la pâtisserie, les beurres mous et tartinables pour le consommateur, etc...).

Cette technologie est basée sur la cristallisation partielle des triglycérides à haut point de fusion provoquée par un refroidissement lent programmé sous agitation douce et ensuite leur séparation de l'huile restante par une opération de filtration ou de centrifugation. La phase solide constituée par les cristaux est appelée stéarine et l'huile restante ou phase liquide est appelée oléine. L'opération peut être répétée de manière multiple sur les oléines obtenues par un nouveau refroidissement à une température plus basse.

Au départ d'une matière grasse solide, on peut ainsi obtenir une fraction oléine à très bas point de fusion (jusqu'à 5°C). Ces opérations successives réalisées sur les oléines obtenues aux étapes antérieures est appelé fractionnement multiple. Dans ce processus, les triglycérides à haut point de fusion cristallisent en premier lieu ; aux plus basses températures, ils sont suivis des triglycérides à point de fusion moyen. Ces triglycérides étant surtout constitués d'acides gras saturés, la diminution de leur concentration dans les phases liquides résiduelles (les oléines) entraîne de ce fait une réduction de la teneur de ces acides gras saturés. Le tableau 2 ci-dessous présente le profil d'acides gras des oléines obtenues par fractionnement multiple de la matière grasse du lait ainsi que leur niveau de réduction en acides gras saturés.

**Tableau 2**

| | Départ | Oléine 20°C | Oléine 15°C | Oléine 10°C | Oléine 5°C |
|---|---|---|---|---|---|
| Rendement de fractionnement | | 67% | 67% | 67% | 55% |
| Rendement par rapport au départ | 100% | 67% | 45% | 30% | 17% |
| Acides gras (% poids) : | | | | | |
| C4 | 3,7 | 4,0 | 4,1 | 4,2 | 4,3 |
| C6 | 2,3 | 2,6 | 2,7 | 2,7 | 2,8 |
| C8 | 1,4 | 1,5 | 1,5 | 1,6 | 1,7 |
| C10 | 2,8 | 3,0 | 3,1 | 3,2 | 3,5 |
| C10:1 | 0,3 | 0,3 | 0,3 | 0,3 | 0,4 |
| C12 | 3,5 | 3,6 | 3,8 | 3,8 | 4,0 |
| C14 | 10,4 | 10,4 | 10,4 | 10,1 | 9,3 |
| C14:1 | 2,0 | 2,0 | 2,3 | 2,4 | 2,6 |
| C15 | 1,2 | 1,0 | 1,0 | 0,9 | 0,9 |
| C16 | 28,3 | 27,0 | 23,9 | 21,2 | 19,1 |
| C16:1 | 2,6 | 2,9 | 3,4 | 3,6 | 4,0 |
| C17 | 0,7 | 0,6 | 0,6 | 0,5 | 0,4 |
| C17:1 | 0,3 | 0,4 | 0,4 | 0,4 | 0,5 |
| C18 | 11,3 | 9,7 | 8,3 | 7,6 | 6,3 |
| C18:1 cis+trans | 25,8 | 27,2 | 30,0 | 32,3 | 35,0 |
| C18:2 cis-cis | 2,2 | 2,4 | 2,7 | 3,0 | 3,3 |
| C18:2 conj. cis-trans | 0,7 | 0,9 | 1,0 | 1,1 | 1,2 |
| C18:3 | 0,6 | 0,6 | 0,7 | 0,8 | 0,9 |
| Somme saturés | 65,6 | 63,3 | 59,4 | 56,0 | 52,4 |
| Somme monoinsaturés (cis+trans) | 30,9 | 32,8 | 36,3 | 39,1 | 42,3 |
| Somme polyinsaturés (cis+trans) | 3,5 | 3,9 | 4,3 | 4,9 | 5,3 |

Dans le tableau 2 qui présente le rendement et composition en acides gras de la matière grasse du lait et de fractions « oléines » obtenues par cristallisation fractionnée multiple, on observe qu'une réduction des acides gras saturés est limitée à environ 13% en valeur absolue (20% en valeur relative) pour les fractions oléiques à plus bas point de fusion (5°C). Cependant, par cristallisation fractionnée, cette réduction ne pourra pas être augmentée en raison de la prise en masse de la matière grasse du lait aux températures inférieures à 4 ou 5°C.

Une troisième méthode pour réduire la teneur des acides gras saturés de la matière grasse du lait consiste en un fractionnement de la matière grasse du lait par distillation moléculaire. La distillation est un procédé de fractionnement classique de liquides constitués d'un mélange de composés ayant des températures d'évaporation différentes. Une fraction nommée « distillat » est constituée des composés qui sont vaporisés et qui sont récupérés après condensation. Une fraction nommée « résidu » constitue le reste du mélange qui n'a pas été vaporisé. La distillation moléculaire (en anglais short path distillation) est un procédé de distillation sous vide caractérisé par une distance réduite entre l'évaporateur et le condenseur. Cette faible distance permet de réaliser des séparations de composés aux propriétés d'évaporation proches, d'où le terme français de distillation moléculaire qui rappelle la grande sélectivité de cette technique de séparation.

L'application de la distillation moléculaire au fractionnement de la matière grasse du lait a été étudiée par Campos R. J., Litwinenko J. W. et Marangoni A. G. 2003. Fractionation of Milk Fat by Short-Path Distillation, Journal of Dairy Science, 86, 735-745. - Arul, J., Boudreau, A., Makhlouf, J., Tardif, R. and Bellavia, T. 1988. Fractionation of anhydrous milk fat by short-path distillation, J. Am. Oil Chem. Soc. 65, 1642-1646. Les études de ces auteurs montrent que le principe de séparation étant basé sur le poids moléculaire, ce sont les triglycérides à chaîne courte qui distillent en premier lieu; ces derniers étant plus saturés, les distillats s'enrichissent légèrement en acides gras saturés au contraire des résidus. Il apparaît que la réduction des acides gras saturés dans les résidus serait de l'ordre de 5 à 10% pour les plus hautes températures de distillation.

Les inventeurs ont réalisé des essais de distillation moléculaire sur une matière grasse de lait d'été (température 210 à 260°C, vide 0,001 mbar). Le résultat de la composition en acides gras des fractions « résidus » est donné sur le tableau 3 qui présente le rendement et la composition en acides gras de la matière grasse du lait et de fractions « résidus » obtenues par distillation moléculaire.

**Tableau 3**

| | départ | 210°C | 230°C | 250°C | 260°C |
|---|---|---|---|---|---|
| Rendement de fractionnement | | 88% | 70% | 46% | 32% |
| Acides gras (% poids) | | | | | |
| C4 | 3.7 | 2.9 | 1.9 | 0.8 | 0.3 |
| C6 | 2.5 | 2.1 | 1.6 | 0.8 | 0.4 |
| C8 | 1.5 | 1.3 | 1.1 | 0.7 | 0.4 |
| C10 | 3.4 | 2.9 | 2.7 | 1.9 | 1.4 |
| C10:1 | 0.3 | 0.2 | 0.2 | 0.2 | 0.1 |
| C12 | 4.0 | 3.5 | 3.2 | 2.8 | 2.2 |
| C14 | 10.8 | 10.1 | 9.5 | 8.8 | 7.9 |
| C14:1 | 1.6 | 1.6 | 1.6 | 1.6 | 1.4 |
| C15 | 1.2 | 1.2 | 1.2 | 1.1 | 1.0 |
| C16 | 24.4 | 24.4 | 23.6 | 22.9 | 22.3 |
| C16:1 | 2.6 | 2.6 | 2.7 | 2.7 | 2.7 |
| C17 | 0.8 | 0.8 | 0.8 | 0.9 | 0.9 |
| C17:1 | 0.4 | 0.4 | 0.4 | 0.4 | 0.4 |
| C18 | 10.9 | 11.6 | 12.4 | 13.4 | 14.3 |
| C18:1 cis+trans | 27.5 | 29.4 | 31.7 | 35.2 | 37.9 |
| C18:2 cis-cis | 2.3 | 2.5 | 2.7 | 3.0 | 3.1 |
| C18:2 conj. cis-trans | 1.4 | 1.5 | 1.7 | 2.0 | 2.2 |
| C18:3 | 0.8 | 0.8 | 0.9 | 1.0 | 1.0 |
| Somme saturés | 63.2 | 60.8 | 58.1 | 54.0 | 51.1 |
| Somme monoinsaturés (cis+trans) | 32.3 | 34.3 | 36.6 | 40.1 | 42.6 |
| Somme polyinsaturés (cis+trans) | 4.5 | 4.9 | 5.3 | 5.9 | 6.3 |

La réduction des acides gras saturés atteint 12% à 260°C. A cette température, la fraction « résidu » représente environ un tiers de la matière grasse du lait de départ et est appauvrie en acides gras saturés et surtout en acides gras saturés à chaîne courte. Le taux résiduel d'acides gras saturés est cependant encore supérieur à 50%.

Par conséquent, les techniques et procédés décrits ci-dessous permettent de réduire le taux d'acides gras saturés de la matière grasse laitière de l'ordre 65% à environ 50 à 55%, soit une réduction de 10 à 15% en valeur absolue. Ces niveaux de réduction sont cependant encore insuffisants pour répondre aux exigences nutritionnelles actuelles qui exigent un maximum de 30 à 40% d'acides gras saturés dans le produit fini. La matière grasse de lait obtenue par ces procédés reste encore majoritairement saturée (plus de 50%).

### Buts de l'invention.

La présente invention vise à obtenir une matière grasse de lait et son procédé d'obtention présentant une réduction de la teneur en acides gras saturés ainsi qu'une augmentation de la teneur en acides gras monoinsaturés et polyinsaturés oméga-6 (acide linoléique C18:2 cis-cis), ALC ou CLA (acide linoléique conjugué C18:2 cis-trans) et oméga-3 (acide alpha linolénique C18:3 cis-cis-cis) et qui ne présentent pas les inconvénients de l'état de la technique.

Un but particulier de la présente invention est de fournir une matière grasse de lait qui est capable de répondre aux exigences nutritionnelles actuelles, c'est-à-dire d'obtenir un produit fini qui comportera
- un taux maximum de 50% ou moins de 40%, voire moins de 35%, d'acides gras saturés,
- un taux minimum d'acides gras monoinsaturés de minimum 45% ou plus de 50%, voire plus de 55%,
- un taux minimum d'acides gras polyinsaturés de minimum 5.5% ou plus de 6.0%, voire plus de 7.0%, sans modification majeure du rapport oméga-6/oméga-3,
ces taux étant exprimés sur les acides gras totaux, et qui permet en outre de réduire la proportion de cholestérol.

La présente invention vise également à obtenir des compositions alimentaires incorporant le produit de l'invention et qui présentent des propriétés nutritionnelles améliorées, en particulier les compositions alimentaires telles que des produits laitiers ou des produits de boulangerie-pâtisserie, des crèmes glacées, des beurres à tartiner, etc...

### Eléments caractéristiques de l'invention.

La présente invention concerne une matière grasse de lait qui présente une teneur en acides gras saturés inférieure à 50%, de préférence 49%, 48%, 47%, 46%, 45%, 44%, 43%, 42%, 41%, 40%, 39%, 38%, 37%, 36% voire 35%, une teneur en acides gras monoinsaturés supérieure à 45%, 46%, 47%, 48%, 49%, 50%, 51%, 52%, 53%, 54% voire 55%, une teneur en acides gras polyinsaturés supérieure à 5.5%, 6.0%, 6.5% voire 7.0%, ces % étant exprimés en poids par rapport aux acides gras totaux, ainsi que toute application alimentaire de cette matière grasse de lait.

L'objet de la présente invention concerne également le procédé d'obtention de cette matière grasse de lait qui présente une teneur en acides gras saturés inférieure à 50%, 49%, 48%, 47%, 46%, 45%, 44%, 43%, 42%, 41%, 40%, 39%, 38%, 37%, 36%, 35%, une teneur en acides gras monoinsaturés supérieure à 45%, 46%, 47%, 48%, 49%, 50%, 51%, 52%, 53%, 54% voire 55%, une teneur en acides gras polyinsaturés supérieure à 5.5%, 6.0%, 6.5% voire 7.0%, ces % étant exprimés en poids par rapport aux acides gras totaux, dans lequel on soumet la matière grasse d'un lait plus particulièrement une matière grasse de lait qui présente une composition normale en acides gras (telle que représentée dans le tableau 1) à
-a) une ou plusieurs étapes de fractionnement par cristallisation combinées à
-b)une ou plusieurs étapes d'interestérification enzymatique suivie(s) d'une ou plusieurs nouvelles étapes de cristallisation fractionnée, ou
-c) une ou plusieurs étapes de fractionnement par distillation moléculaire.

Dans le cas d'un traitement par interestérification enzymatique, le procédé doit comprendre :
- une ou plusieurs étape(s) de fractionnement par cristallisation, suivie(s) de
- une ou plusieurs étape(s) d'interestérification enzymatique suivie(s) de
- une ou plusieurs nouvelle(s) étape(s) de fractionnement par cristallisation. En effet, l'interestérification enzymatique ne réduit pas le taux d'acides gras saturés, mais permet la reformation de triglycérides saturés extractibles par une ou plusieurs étapes ultérieures de fractionnement par cristallisation.

Dans le cas d'un traitement par distillation moléculaire, le procédé doit comprendre :
- une ou plusieurs étape(s) de fractionnement par cristallisation, suivie(s) de
- une ou plusieurs étape(s) de fractionnement par distillation moléculaire. En effet, la distillation moléculaire provoque une réduction supplémentaire du taux d'acides gras saturés des fractions oléiques obtenues préalablement.

Les inventeurs ont observé que la combinaison des étapes du procédé de l'invention permet une modification d'une ampleur inattendue de la composition en acides gras dans le produit traité.

Selon une première forme d'exécution préférée de l'invention, le procédé comprend :
a) une ou plusieurs étape(s) de fractionnement par cristallisation telle que connue(s) de l'homme de l'art et correspondant donc à un fractionnement de préférence multiple de la matière grasse du lait, via une cristallisation partielle des triglycérides à haut point de fusion provoquée par un refroidissement lent programmé sous agitation douce et ensuite à une séparation de l'huile restante par une opération de filtration ou de centrifugation.

Cette étape ou ces étapes de fractionnement par cristallisation sont combinées à b)une ou plusieurs étape(s) d'interestérification enzymatique de la matière grasse du lait, c'est-à-dire que la matière grasse du lait précédemment obtenue, de préférence la phase liquide (oléine) à bas point de fusion (plus particulièrement des oléines à température de fusion à 20°C ou à 15°C, de préférence à 10°C, plus particulièrement à 5°C de température de fusion) est soumise à une série de réactions d'hydrolyse et de réestérification des acides gras occupant des positions externes sn-1 et sn-3 des triglycérides. Ce traitement permet une redistribution au hasard des acides gras de ces positions externes. Une reformation de triglycérides saturés permet à nouveau une extraction par une ou plusieurs étape(s) de fractionnement par cristallisation. Dans cette première forme d'exécution, on procède donc à une ou plusieurs étape(s) de fractionnement par cristallisation suivie(s) d'une ou plusieurs étape(s) d'interestérification enzymatique suivie(s) elle(s)-même(s) à nouveau d'une ou plusieurs étape(s) de fractionnement par cristallisation.

De préférence, les produits de départ soumis à une ou plusieurs étape(s) d'interestérification enzymatique sont de préférence la phase liquide à bas point de fusion (oléine 10°C ou oléine 5°C). Les résultats sont meilleurs en partant d'oléines 5°C qui contiennent le moins d'acides gras saturés au départ.

Dans le procédé de l'invention, l'étape d'hydrolyse d'interestérification s'effectue par une lipase, telle que la lipase Lipozyme^{R} TL IM de la société NOVOZYMES (Danemark).

De préférence, les conditions de réactions d'hydrolyse se font à une température comprise entre environ 60°C et 90°C, de préférence à une température de l'ordre de 70°C, pendant une durée minimale d'1 heure, de préférence pendant une durée de l'ordre de 6 heures.

Pour obtenir une réaction efficace, la teneur en eau du milieu de réaction dans cette étape d'interestérification est de préférence inférieure à 0.1%, de manière à permettre une réestérification rapide des acides gras libérés par hydrolyse et en limitant le taux d'acides gras libres formés.

Une interestérification enzymatique de la matière grasse laitière et de ses fractions oléiques permet la reformation avantageuse de triglycérides trisaturés et monoinsaturés. Cette reformation se traduit par une augmentation du point de fusion et du taux de matière grasse solide à différentes températures des matières grasses traitées. Ces modifications de composition en triglycérides et les modifications des propriétés physiques de cristallisation sont plus marquées pour des fractions oléiques que pour la matière grasse de lait non fractionnée. Elles sont d'autant plus marquées que le point de fusion de la fraction oléique traitée est bas. Les étapes d'interestérification enzymatique donnent des résultats plus avantageux, si elles sont réalisées sur une fraction oléique de matière grasse de lait dans laquelle la reformation des triglycérides saturés cristallisables est accrue par comparaison avec une matière grasse de lait non fractionnée. Dans ce cas, l'addition au procédé de l'invention d'une ou de plusieurs étape(s) de fractionnement par cristallisation après la ou les étapes d'interestérification enzymatique permettent à nouveau d'obtenir une réduction significative des pourcentages d'acides gras saturés dans le produit final. De manière avantageuse, ces étapes de fractionnement par cristallisation peuvent s'effectuer à basse température (par exemple à 15°C puis à 2°C) sur une oléine 5°C interestérifiée.

Ces effets de l'interestérification enzymatique et les propriétés physiques de cristallisation de la matière grasse du lait et de ses fractions oléiques sont illustrés au tableau 4.

Dans le tableau 4 ci-dessous les inventeurs présentent l'effet de cette interestérification enzymatique sur le taux de solide et le point de fusion de diverses fractions oléines traitées. (tableau 5)

**tableau 4**

| | Matière grasse de lait | | | Oléine 20°C | | | Oléine 15°C | | | Oléine 10°C | | | Oléine 5°C | | |
|---|---|---|---|---|---|---|---|---|---|---|---|---|---|---|---|
| | avant | après | *diff.* | avant | après | *diff.* | avant | après | *diff.* | avant | après | *diff.* | avant | après | *diff.* |
| Taux de matière grasse solide à : | | | | | | | | | | | | | | | |
| 5°C | 48.9 | 51.3 | *2.4* | 32.5 | 37.3 | *4.8* | 20.7 | 29.6 | *8.9* | 9.1 | 26.8 | *17.7* | 1.5 | 23.1 | *21.6* |
| 10°C | 37.7 | 41.2 | *3.5* | 19.8 | 26.6 | *6.8* | 6.8 | 20.4 | *13.5* | 1.8 | 18.3 | *16.5* | 0.2 | 15.0 | *14.8* |
| 15°C | 26.7 | 327 | *6.0* | 5.8 | 18.7 | *12.9* | 0.6 | 14.1 | *13.5* | 0.6 | 12.1 | *11.5* | 0.0 | 9.5 | *9.5* |
| 20°C | 18.5 | 25.6 | *7.1* | 0.8 | 12.7 | *11.9* | 0.0 | 9.6 | *9.6* | 0.2 | 7.0 | *6.8* | 0.0 | 5.0 | *5.0* |
| 25°C | 12.0 | 18.4 | *6.4* | 0.6 | 8.2 | *7.6* | 0.0 | 7.2 | *7.2* | 0.0 | 3.8 | *3.8* | 0.0 | 1.5 | *1.5* |
| 30°C | 6.0 | 11.4 | *5.4* | 0.0 | 6.0 | *6.0* | 0.0 | 5.4 | *5.4* | | | | | | |
| 35°C | 1.1 | 5.1 | *4.1* | | | | | | | | | | | | |
| Point de fusion (°C) | 33.0 | 37.6 | *4.6* | 21.2 | 35.1 | *13.9* | 14.6 | 30.9 | *16.3* | 11.0 | 27.0 | *16.0* | 6.1 | 26.7 | *20.6* |

Il apparaît au vu du tableau 4 que les propriétés physiques (taux de matière grasse solide et point de fusion) d'une matière grasse de lait et de ses fractions oléines avant et après une interestérification enzymatique sont modifiées. L'interestérification enzymatique provoque effectivement un durcissement (illustré par une augmentation de la température de fusion et du taux de matière grasse solide aux températures inférieures à ce point de fusion) de la matière grasse de lait et surtout de ses oléines. Ces modifications de propriétés physiques se réalisent sans modification de la composition en acides gras des matières grasses interestérifiées (voir tableau 5).

De manière avantageuse, on peut retraiter les produits obtenus par l'interestérification enzymatique à nouveau à une ou plusieurs étapes de fractionnement par cristallisation afin d'à nouveau réduire le taux d'acides gras saturés dans la composition obtenue. Ainsi, l'oléine 5°C interestérifiée présente des taux de solide qui sont proches des oléines 15°C et même des oléines 20°C non interestérifiées. De manière avantageuse, une double opération de fractionnement par cristallisation a pu ainsi être réalisée à 15°C, puis à 2°C sur l'oléine 5°C interestérifiée. Le résultat obtenu pour les oléines de ces deux nouveaux fractionnements est présenté dans les tableaux 5 et 6.

Le tableau 5 présente les rendement et composition en acides gras de fractions oléines obtenues par cristallisation fractionnée d'une oléine 5°C de matière grasse de lait interestérifiée.

**Tableau 5**

| | Oléine 5°C | Oléine 5°C interestérifiée | Oléine 15°C d'oléine 5°C interestérifiée | Oléine 2°C d'oléine 5°C interestérifiée |
|---|---|---|---|---|
| Rendement de fractionnement | | | 75% | 70% |
| Rendement par rapport au départ | 100% | 100% | 75% | 53% |
| Acides gras (% poids) : | | | | |
| C4 | 4.5 | 4.3 | 4.5 | 4.8 |
| C6 | 2.6 | 2.7 | 2.8 | 3.0 |
| C8 | 1.5 | 1.6 | 1.7 | 1.8 |
| C10 | 3.0 | 3.0 | 3.1 | 3.2 |
| C10:1 | 0.3 | 0.3 | 0.3 | 0.4 |
| C12 | 3.6 | 3.6 | 3.5 | 3.5 |
| C14 | 8.8 | 9.0 | 8.5 | 8.0 |
| C14:1 | 2.7 | 2.7 | 2.8 | 3.0 |
| C15 | 0.9 | 0.9 | 0.9 | 0.8 |
| C16 | 19.1 | 19.1 | 17.4 | 15.6 |
| C16:1 | 4.1 | 4.1 | 4.5 | 4.7 |
| C17 | 0.5 | 0.4 | 0.4 | 0.4 |
| C17:1 | 0.5 | 0.5 | 0.5 | 0.6 |
| C18 | 6.1 | 6.1 | 5.6 | 4.8 |
| C18:1 cis+trans | 36.6 | 36.6 | 38.1 | 39.8 |
| C18:2 cis-cis | 2.9 | 2.9 | 3.1 | 3.2 |
| C18:2 conj. cis-trans | 1.3 | 1.3 | 1.4 | 1.5 |
| C18:3 | 0.8 | 0.8 | 0.9 | 0.9 |
| Somme saturés | 50.7 | 50.6 | 48.4 | 46.0 |
| Somme monoinsaturés (cis+trans) | 44.3 | 44.3 | 46.3 | 48.4 |
| Somme polyinsaturés (cis+trans) | 5.1 | 5.1 | 5.3 | 5.6 |

Le tableau 6 présente des propriétés physiques (taux de matière grasse solide et point de fusion) de fractions oléines obtenues par cristallisation fractionnée d'une oléine 5°C de matière grasse de lait interestérifiée.

**Tableau 6**

| | Oléine 5°C | Oléine 5°C interestérifiée | Oléine 15°C d'oléine 5°C interestérifiée | Oléine 2°C d'oléine 5°C interestérifiée |
|---|---|---|---|---|
| Taux de matière grasse solide à : | | | | |
| 5°C | 1.4 | 23.1 | 12.8 | 1.8 |
| 10°C | 0.0 | 15.0 | 5.7 | 0.0 |
| 15°C | 0.0 | 9.5 | 0.8 | 0.0 |
| 20°C | 0.0 | 5.0 | 0.0 | 0.0 |
| 25°C | 0. 0 | 1.5 | 0.0 | 0.0 |
| Point de fusion (°C) | 4.0 | 26.7 | 15.3 | 7.0 |

De manière avantageuse la combinaison d'une ou plusieurs étapes de fractionnement par cristallisation suivi d'une interestification enzymatique suivi elle-même d'une ou plusieurs étapes de fractionnement par cristallisation permet d'obtenir une fraction de matière grasse de lait dont le taux d'acides gras saturés est très significativement inférieur à 50% et peut atteindre 46% dans la présente forme d'exécution. Ce niveau de réduction est impossible à atteindre avec les procédés connus de l'état de la technique. En outre, les acides gras saturés restants sont plus fortement représentés par des acides gras courts c'est-à-dire, des acides gras de 4 à 10 atomes de carbone caractéristiques de la matière grasse du lait.

Le produit ainsi obtenu présente une fraction appauvrie en acides gras saturés avec un point de fusion très bas (inférieur à 10°C).

Selon une deuxième forme d'exécution préférée de l'invention on combine une ou plusieurs étapes de fractionnement par cristallisation et une ou plusieurs étapes de fractionnement par distillation moléculaire.

Dans cette forme d'exécution préférée de l'invention on soumet la matière grasse du lait à une ou plusieurs étapes de fractionnement par cristallisation tel que décrit ci-dessus et à une ou plusieurs étapes de fractionnement par distillation moléculaire.

Le fractionnement par distillation moléculaire d'une oléine 15°C (fraction oléique 15°C) de matière grasse du lait s'effectue par des températures d'évaporation comprises entre environ 200°C et environ 300°C, de préférence entre environ 230°C et environ 270°C sous vide (c'est-à-dire à une valeur inférieure à 0.1 mbar, de préférence inférieure à 0.01 mbar). Une étape de fractionnement par distillation moléculaire d'une oléine à 10°C de matière grasse du lait s'effectue à des températures d'évaporation comprises entre environ 200°C et environ 300°C de préférence entre environ 230°C et environ 270°C sous les mêmes conditions de vide. De même, le fractionnement par distillation moléculaire d'une oléine 5°C de la matière grasse du lait s'effectue à des températures d'évaporation comprises entre environ 200°C et environ 300°C de préférence entre environ 230°C et environ 270°C sous les mêmes conditions de vide.

Comme décrit ci-dessus on traite la phase liquide (oléine) à bas point de fusion obtenue par fractionnement, par cristallisation moléculaire. La phase liquide présente un bas point de fusion, de préférence une oléine 15°C, plus particulièrement une oléine 10°C, de manière encore plus préférée une oléine 5°C.

La séparation entre ces différentes oléines s'effectue par des procédés connus de l'homme de l'art.

En appliquant une ou plusieurs étapes de fractionnement par distillation moléculaire des fractions oléiques à bas point de fusion, on obtient une réduction supplémentaire très importante et inattendue de la teneur en acides gras saturés dans des fractions « résidus ». La fraction « résidu » est la fraction de matière grasse de lait qui n'a pas été évaporée lors de la distillation. Elle est constituée des triglycérides à plus haut poids moléculaire et moins saturés.

De plus, suite aux effets connus de la distillation moléculaire (brevets AU 512606 et EP 0442184), on constate un taux très fortement réduit en cholestérol dans les fractions « résidus » (taux de réduction supérieur ou égal à 95%).

Les données de ces différents exemples sont repris dans les tableaux 7 et 8.

Le tableau 7 représente le rendement, composition en acides gras et en cholestérol de fractions obtenues par distillation moléculaire de fractions oléines de matière grasse de lait.

**Tableau 7**

| | Oléine 15°C | | | Oléine 10°C | | | | Oléine 5°C | | | |
|---|---|---|---|---|---|---|---|---|---|---|---|
| | départ | résidu à 250°C | résidu à 270°C | départ | résidu à 230°C | résidu à 250°C | résidu à 270°C | départ | résidu à 230°C | résidu à 250°C | résidu à 270°C |
| Rendement de fractionnement | | 43% | 18% | | 67% | 40% | 17% | | 69% | 55% | 19% |
| Acides gras (% poids) | | | | | | | | | | | |
| C4 | 4.1 | 0.7 | 0.1 | 4.1 | 2.1 | 0.5 | 0.1 | 4.2 | 2.3 | 0.9 | 0.2 |
| C6 | 2.5 | 0.7 | 0.1 | 2.6 | 1.7 | 0.6 | 0.1 | 2.7 | 1.8 | 0.9 | 0.2 |
| C8 | 1.4 | 0.6 | 0.1 | 1.6 | 1.1 | 0.6 | 0.1 | 1.7 | 1.2 | 0.8 | 0.2 |
| C10 | 2.8 | 1.7 | 0.5 | 3.0 | 2.3 | 1.6 | 0.5 | 3.2 | 2.4 | 1.9 | 0.7 |
| C10:1 | 0.3 | 0.2 | 0.0 | 0.3 | 0.2 | 0.2 | 0.0 | 0.3 | 0.2 | 0.2 | 0.1 |
| C12 | 3.3 | 2.2 | 1.0 | 3.4 | 2.6 | 2.2 | 1.0 | 3.6 | 2.7 | 2.4 | 1.3 |
| C14 | 9.8 | 7.3 | 5.2 | 9.5 | 7.6 | 6.9 | 4.9 | 9.0 | 7.3 | 6.7 | 5.2 |
| C14:1 | 2.3 | 2.3 | 1.5 | 2.3 | 2.4 | 2.4 | 1.5 | 2.5 | 2.5 | 2.6 | 1.9 |
| C15 | 1.0 | 0.8 | 0.7 | 1.1 | 1.0 | 0.8 | 0.7 | 0.9 | 0.8 | 0.8 | 0.7 |
| C16 | 23.1 | 19.7 | 18.1 | 20.3 | 18.6 | 17.2 | 16.0 | 18.8 | 17.5 | 16.3 | 15.3 |
| C16:1 | 3.6 | 4.0 | 3.6 | 3.7 | 4.0 | 4.1 | 3.7 | 3.9 | 4.1 | 4.3 | 4.1 |
| C17 | 0.6 | 0.6 | 0.6 | 0.5 | 0.6 | 0.6 | 0.6 | 0.5 | 0.5 | 0.5 | 0.5 |
| C17:1 | 0.4 | 0.5 | 0.5 | 0.5 | 0.5 | 0.6 | 0.6 | 0.5 | 0.6 | 0.6 | 0.6 |
| C18 | 7.9 | 9.3 | 10.8 | 7.3 | 8.1 | 8.7 | 10.0 | 6.5 | 7.3 | 7.7 | 8.6 |
| C18:1 cis+trans | 32.5 | 43.5 | 50.2 | 35.0 | 41.5 | 46.6 | 52.9 | 36.6 | 42.8 | 46.9 | 52.8 |
| C18:2 cis-cis | 2.7 | 3.5 | 4.0 | 2.9 | 3.4 | 3.7 | 4.2 | 3.1 | 3.6 | 3.9 | 4.3 |
| C 18:2 conj. cis-trans | 1.0 | 1.6 | 1.9 | 1.1 | 1.4 | 1.7 | 2.0 | 1.2 | 1.5 | 1.7 | 2.0 |
| C18:3 | 0.7 | 0.9 | 1.0 | 0.8 | 0.9 | 1.0 | 1.1 | 0.8 | 1.0 | 1.0 | 1.1 |
| Somme saturés | 56.6 | 43.6 | 37.2 | 53.4 | 45.7 | 39.8 | 33.9 | 51.1 | 43.7 | 38.8 | 33.1 |
| Somme monoinsaturés (cis+trans) | 39.0 | 50.4 | 55.8 | 41.9 | 48.6 | 53.9 | 58.8 | 43.8 | 50.2 | 54.6 | 59.5 |
| Somme polyinsaturés (cis+trans) | 4.4 | 6.0 | 6.9 | 4.7 | 5.7 | 6.4 | 7.3 | 5.1 | 6.0 | 6.6 | 7.5 |
| Cholestérol (mg / 100 g) | 377 | 13 | 11 | 410 | 20 | 11 | < 10 | 450 | 23 | 14 | < 10 |

Le tableau 8 représente les propriétés physiques (taux de matière grasse solide et point de fusion) de fractions obtenues par distillation moléculaire de fractions oléines de matière grasse de lait.

**Tableau 8**

| | Oléine 15°C | | | Oléine 10°C | | | | Oléine 5°C | | | |
|---|---|---|---|---|---|---|---|---|---|---|---|
| | départ | résidu à 250°C | résidu à 270°C | départ | résidu à 230°C | résidu à 250°C | résidu à 270°C | départ | résidu à 230°C | résidu à 250°C | résidu à 270°C |
| Taux de matière grasse solide à : | | | | | | | | | | | |
| 5°C | 22.7 | 46.6 | 44.6 | 8.8 | 25.7 | 36.3 | 31.0 | 1.1 | 14.6 | 23.0 | 21.3 |
| 10°C | 9.0 | 28.9 | 25.8 | 1.0 | 8.1 | 16.8 | 12.7 | 0.0 | 2.1 | 5.1 | 3.4 |
| 15°C | 1.0 | 11.5 | 9.5 | 0.0 | 0.5 | 1.6 | 0.7 | 0.0 | 0.0 | 0.0 | 0.0 |
| 20°C | 0.0 | 0.6 | 0.5 | 0.0 | 0.0 | 0.0 | 0.0 | 0.0 | 0.0 | 0.0 | 0.0 |
| 25°C | 0.0 | 0.0 | 0.0 | 0.0 | 0.0 | 0.0 | 0.0 | 0.0 | 0.0 | 0.0 | 0.0 |
| Point de fusion (°C) | 14.7 | 20.0 | 19.5 | 9.5 | 14.7 | 16.8 | 16.0 | 4.0 | 12.6 | 13.8 | 12.9 |

La combinaison des procédés physiques de cristallisation fractionnée et de distillation moléculaire permet d'obtenir des fractions de matière grasse de lait dont le taux d'acides gras saturés est très significativement inférieur à 50%, selon les fractions oléiques employées et les conditions de température d'évaporation du traitement de distillation moléculaire ; les fractions « résidus » obtenues ont une teneur en acides gras saturés comprise entre environ 45,7 et environ 33,1%, une teneur en acides gras monoinsaturés comprise entre 48.6 et 59.5%, et une teneur en acides gras polyinsaturés comprise entre 5.7 et 7.5%, sans modification significative du rapport « oméga-6/oméga-3 ». Ces modifications de la composition en acides gras de la matière grasse de lait sont impossibles à atteindre avec les procédés décrits dans l'état de la technique.

A l'exception de l'acide stéarique (C18), acide gras reconnu comme non hypercholestérolémiant, la distillation moléculaire réduit la proportion de l'ensemble des acides gras saturés, mais plus fortement les acides gras saturés à chaîne courte.

Grâce à l'application de la distillation moléculaire, les fractions appauvries en acides gras saturés présentent également des teneurs en cholestérol fortement diminuées (élimination de minimum 95% du cholestérol présent initialement dans la matière grasse du lait).

En outre, ces fractions dites « résidus » appauvries en acides gras saturés et en cholestérol de l'invention présentent des propriétés physiques améliorées (le point de fusion et le taux de solide est modifié). Le taux de solide qui est égal au taux de matière grasse solide à une température donnée est fortement modifié. Plus cette valeur du taux de solide est élevée, plus la matière grasse est ferme à la température considérée. Cette caractéristique est essentielle pour certaines applications comme les matières grasses à tartiner (beurre,...), pour lesquelles le taux de solide doit être supérieur à 10%, de préférence supérieur à 15%. Pour les émulsions de type « huile dans eau » (lait, crème de cuisine, fromages, yaourts,...), cette caractéristique est moins importante. Cependant, les modifications de propriétés physiques des produits obtenus de l'invention permettent d'élargir leurs possibilités d'applications en particulier parce que leur point de fusion est alors compris entre 13 et 20°C.

Selon une forme d'exécution préférée de l'invention, le procédé de l'invention peut être appliqué sur une matière grasse du lait présentant une teneur en acides gras saturés plus basse que celle d'un produit standard (tel que représenté sur le tableau 1) en particulier en partant d'un lait provenant de vaches laitières dont l'alimentation a été enrichie par un aliment riche en acides gras poly-insaturés par exemple un aliment à base de lin ou de soja.

La présente invention concerne également des compositions alimentaires comprenant les fractions de matière grasse de lait de l'invention. Ces fractions peuvent être présentes en mélange pour réduire les effets induits par les caractéristiques extrêmes des fractions obtenues tel que la réduction des taux d'acides gras à courte chaîne ou la fluidité des fractions obtenues. Le produit de l'invention, en particulier les nouvelles fractions obtenues par le procédé de l'invention trouvent différentes applications en particulier dans des produits laitiers de type lait, crème, fromage, lait fermenté, lait aromatisé, desserts, etc. c'est-à-dire pour toutes les applications de type émulsion « huile dans eau ».

De même, le produit de l'invention (nouvelles fractions) peut trouver des applications avantageuses dans des produits de boulangerie-pâtisserie, tels que les pâtes à crêpes, à choux, à cakes, à brioches. Lorsqu'on utilise le produit de l'invention dans un mélange à faible proportion (de 20 à 25%) d'une fraction stéarine à haut point de fusion, la nouvelle fraction oléique à faible taux d'acides gras saturés permet la production d'un beurre de préférence allégé et tartinable (« spreadable ») dont la matière grasse ne contient plus que 50% d'acides gras saturés contre près de 60% pour les beurres ou beurres allégés tartinables enrichis en fraction oléine classique.

En outre, le produit de l'invention en particulier les fractions nouvelles « résidus » à faible taux d'acides gras saturés et à faible pourcentage en cholestérol peuvent trouver différentes applications avantageuses dans des compositions alimentaires. Le produit de l'invention peut être également utilisé pour la consommation quotidienne de produits laitiers gras de manière à réduire le risque de maladies cardiovasculaires.

## Revendications

1. Une matière grasse de lait qui présente une teneur en acides gras saturés inférieure à 50% (en poids) par rapport aux acides gras totaux.

2. La matière grasse de lait selon la revendication 1 qui présente une teneur en acides gras saturés inférieure à 45% (en poids) par rapport aux acides gras totaux.

3. La matière grasse de lait selon la revendication 1 ou 2 qui présente une teneur en acides gras saturés inférieure à 40% (en poids) par rapport aux acides gras totaux.

4. La matière grasse de lait selon l'une quelconque des revendications précédentes 1 à 3 qui présente une teneur en acides gras saturés inférieure à 35% (en poids) par rapport aux acides gras totaux.

5. La matière grasse de lait selon l'une quelconque des revendications précédentes 1 à 4 qui présente une teneur en acides gras monoinsaturés supérieure à 45%, de préférence à 50%, voire à 55% et une teneur en acides gras polyinsaturés supérieure à 5,5%, de préférence à 6,0%, voire à 7,0%, ces teneurs étant exprimées en poids par rapport aux acides gras totaux.

6. La matière grasse de lait selon l'une quelconque des revendications précédentes 1 à 5 dans laquelle la concentration en cholestérol est inférieure à 12 mg/100g, de préférence inférieure à 10 mg/100g.

7. Un procédé d'obtention de la matière grasse de lait selon l'une quelconque des revendications précédentes 1 à 6 dans lequel on soumet tout ou partie d'une matière grasse du lait à
a)une ou plusieurs étape(s) de fractionnement par cristallisation suivies d'
b)une ou plusieurs étape(s) d'interestérification enzymatique suivie (s) d'une ou plusieurs nouvelles étapes de cristallisation fractionnée, ou suivies d'
c)une ou plusieurs étapes de fractionnement par distillation moléculaire. *(idem 6.)*

8. Le procédé selon la revendication 7,
**caractérisé en ce que** la ou les étapes d'interestérification enzymatique corresponde (nt) à une hydrolyse avec une lipase à une température comprise entre 60°C et 90°C, pendant une durée supérieure à 1 heure, de préférence à une température de l'ordre de 70°C pendant une durée de l'ordre de 6 heures.

9. Le procédé selon la revendication 8,
**caractérisé en ce que** la teneur en eau du milieu de réaction de l'étape d'interestérification est inférieure à 0,1%.

10. Le procédé selon la revendication 7,
**caractérisé en ce qu'**une ou plusieurs des étapes de fractionnement par distillation moléculaire s'effectue (nt) à des températures d'évaporation comprises entre 200°C et 300°C sous vide, de préférence entre 230°C et 270°C sous vide de préférence à une pression inférieure à 0.1 mbar, plus particulièrement inférieure à 0.01 mbar.

11. La composition alimentaire comprenant la matière grasse du lait selon l'une quelconque des revendications 1 à 6 ou la matière grasse du lait obtenue selon le procédé de l'une quelconque des revendications 7 à 10.

12. La composition alimentaire selon la revendication 11, **caractérisé en ce qu'**elle est un produit de type émulsion huile dans eau.

13. La composition alimentaire selon la revendication 11, **caractérisé en ce qu'**elle est un produit de type émulsion eau dans huile.

14. La composition alimentaire selon les revendications 11 à 13, **caractérisé en ce que**lle est choisie parmi le groupe constitué par les pâtes à crêpes, les pâtes à choux, les pâtes à cakes, les brioches, les beurres à tartiner, les crèmes glacées, les crèmes de lait, les fromages, les laits fermentés, les laits aromatisés et autres types de desserts.
